(19) Europäisches Patentamt
European Patent Office
Office européen des brevets

(11) EP 4 498 450 A2

(12) EUROPEAN PATENT APPLICATION

(43) Date of publication:
**29.01.2025 Bulletin 2025/05**

(21) Application number: **24184472.9**

(22) Date of filing: **25.06.2024**

(51) International Patent Classification (IPC):
***H01M 4/505*** $^{(2010.01)}$ ***H01M 10/0525*** $^{(2010.01)}$
***H01M 10/0567*** $^{(2010.01)}$ ***H01M 10/0569*** $^{(2010.01)}$

(52) Cooperative Patent Classification (CPC):
**H01M 10/0567; H01M 4/505; H01M 10/0525; H01M 10/0569;** H01M 2300/0037

(84) Designated Contracting States:
**AL AT BE BG CH CY CZ DE DK EE ES FI FR GB GR HR HU IE IS IT LI LT LU LV MC ME MK MT NL NO PL PT RO RS SE SI SK SM TR**
Designated Extension States:
**BA**
Designated Validation States:
**GE KH MA MD TN**

(30) Priority: **28.06.2023 KR 20230083708**

(71) Applicant: **Samsung SDI Co., Ltd.**
**Gyeonggi-do (KR)**

(72) Inventors:
- **Park, Sangwoo**
  **17084 Yongin-si, Gyeonggi-do (KR)**
- **Choi, Hyunbong**
  **17084 Yongin-si, Gyeonggi-do (KR)**
- **Kim, Sanghoon**
  **17084 Yongin-si, Gyeonggi-do (KR)**
- **Park, Hongryeol**
  **17084 Yongin-si, Gyeonggi-do (KR)**
- **Kim, Dahyun**
  **17084 Yongin-si, Gyeonggi-do (KR)**
- **Kim, Sundae**
  **17084 Yongin-si, Gyeonggi-do (KR)**
- **Yang, Yeji**
  **17084 Yongin-si, Gyeonggi-do (KR)**

(74) Representative: **Gulde & Partner**
**Patent- und Rechtsanwaltskanzlei mbB**
**Berliner Freiheit 2**
**10785 Berlin (DE)**

# (54) RECHARGEABLE LITHIUM BATTERY

(57) Disclosed are a rechargeable lithium battery including a positive electrode including a positive electrode active material; a negative electrode including a negative electrode active material; and an electrolyte solution including a lithium salt, a non-aqueous organic solvent, and an additive, wherein the positive electrode active material includes a cobalt-free lithium nickel manganese-based oxide, the non-aqueous organic solvent includes 0.05 wt% to 10.0 wt% of ethylene carbonate based on a total amount of the electrolyte solution, and the additive includes a phosphorus-based compound including a trialkylsilyl group.

EP 4 498 450 A2

## Description

## BACKGROUND

### 1. Field

Rechargeable lithium batteries are disclosed.

### 2. Description of the Related Art

Recently, with the rapid spread of electronic devices that use batteries, such as, for example, mobile phones, laptop computers, and electric vehicles, interest in rechargeable batteries having high energy density and high capacity is rapidly increasing. Accordingly, research and development to improve the performance of rechargeable lithium batteries is actively underway.

A rechargeable lithium battery includes a positive electrode and a negative electrode including an active material capable of intercalating and deintercalating lithium ions, and an electrolyte solution, and electrical energy is produced through oxidation and reduction reactions if lithium ions are intercalated/deintercalated from the positive electrode and negative electrode.

As IT devices become increasingly high-performance, high-capacity batteries are beneficial, wherein the high capacity may be realized by expanding a voltage region to increase energy density, but there is a problem of oxidizing an electrolyte solution in the high voltage region and thus deteriorating performance of a positive electrode.

For example, cobalt-free lithium nickel manganese-based oxide is a positive electrode active material including not cobalt but nickel, manganese, and the like as a main component in its composition, and accordingly, a positive electrode including the same may be economical and realize high energy density and thus has drawn attention as a next generation positive electrode active material.

However, if the positive electrode including the cobalt-free lithium nickel manganese-based oxide is used in a high voltage environment, transition metals may be eluted due to structural collapse of the positive electrode, thereby causing a problem such as gas generation inside a cell, capacity reduction, and/or the like. This transition metal elution tends to be aggravated in a high temperature environment, wherein the eluted transition metals are precipitated on the surface of a negative electrode and may cause a side reaction and thereby increase battery resistance and deteriorate battery cycle-life and output characteristics.

Accordingly, it would be beneficial for technology to suppress or reduce structural collapse of a positive electrode including a cobalt-free lithium nickel manganese-based oxide even under high-voltage and high-temperature conditions.

## SUMMARY

The invention is defined by the appended claims. The description that follows is subjected to this limitation. Any disclosure lying outside the scope of said claims is only intended for illustrative as well as comparative purposes. Some embodiments of the present disclosure provide a rechargeable lithium battery that suppresses or reduces structural collapse of a positive electrode including cobalt-free lithium nickel manganese-based oxide even under high-voltage and high-temperature conditions.

A rechargeable lithium battery is provided including:

a positive electrode including a positive electrode active material; a negative electrode including a negative electrode active material; and an electrolyte solution including a lithium salt, a non-aqueous organic solvent, and an additive,
the positive electrode active material includes a cobalt-free lithium nickel manganese-based oxide,
the non-aqueous organic solvent includes 0.05 wt% to 10.0 wt% of ethylene carbonate based on a total amount of the electrolyte solution, and
the additive includes a phosphorus-based compound including a trialkylsilyl group.

The rechargeable lithium battery according to some embodiments uses a positive electrode including a cobalt-free lithium nickel manganese-based oxide, and structural collapse of the positive electrode is suppressed or reduced even under high-voltage and high-temperature conditions, thereby improving stability and cycle-life characteristics.

## BRIEF DESCRIPTION OF THE DRAWING

The accompanying drawing, together with the specification, illustrates embodiments of the subject matter of the present disclosure, and, together with the description, serves to explain principles of embodiments of the subject matter of

the present disclosure.

The accompanying drawing is a schematic view showing a rechargeable lithium battery according to some embodiments.

## DETAILED DESCRIPTION

Hereinafter, embodiments of the present disclosure will be described in more detail. However, these embodiments are examples, the present disclosure is not limited thereto and the present disclosure is defined by the scope of the appended claims, and equivalents thereof.

As used herein, if specific definition is not otherwise provided, it will be understood that if an element such as a layer, film, region, or substrate is referred to as being "on" another element, it can be directly on the other element or intervening elements may also be present.

As used herein, if specific definition is not otherwise provided, "substituted" refers to replacement of at least one hydrogen of a substituent or a compound by deuterium, a halogen, a hydroxyl group, an amino group, a substituted or unsubstituted C1 to C30 amine group, a nitro group, a substituted or unsubstituted C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, a cyano group, or a combination thereof.

In one example of the present disclosure, "substituted" refers to replacement of at least one hydrogen of a substituent or a compound by deuterium, a halogen, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C10 fluoroalkyl group, or a cyano group. In some embodiments, in an example of the present disclosure, "substituted" refers to replacement of at least one hydrogen of a substituent or a compound by deuterium, a halogen group, a C1 to C20 alkyl group, a C6 to C30 aryl group, a C1 to C10 fluoroalkyl group, or a cyano group. In some embodiments, in an example of the present disclosure, "substituted" refers to replacement of at least one hydrogen of a substituent or a compound by deuterium, a halogen, a C1 to C5 alkyl group, a C6 to C18 aryl group, a C1 to C5 fluoroalkyl group, or a cyano group. In some embodiments, in an example of the present disclosure, "substituted" refers to replacement of at least one hydrogen of a substituent or a compound by deuterium, a cyano group, a halogen, a methyl group, an ethyl group, a propyl group, a butyl group, a phenyl group, a biphenyl group, a terphenyl group, a trifluoromethyl group, or a naphthyl group.

### Rechargeable Lithium Battery

A rechargeable lithium battery is provided including a positive electrode including a positive electrode active material;

a negative electrode including a negative electrode active material; and
an electrolyte solution including a lithium salt, a non-aqueous organic solvent, and an additive,
the positive electrode active material includes a cobalt-free lithium nickel manganese-based oxide,
the non-aqueous organic solvent includes 0.05 wt% to 10.0 wt% of ethylene carbonate based on a total amount of the electrolyte solution, and
the additive includes a phosphorus-based compound including a trialkylsilyl group.

In other rechargeable lithium batteries, the cobalt-free lithium nickel manganese-based oxide has strong structural instability, resulting in elution of transition metals (particularly Ni) under high-voltage conditions, and the stability and cycle-life of the rechargeable lithium batteries rapidly increase.

However, in the rechargeable lithium battery according to some embodiments, while using a positive electrode including a cobalt-free lithium nickel manganese-based oxide, structural collapse of the positive electrode may be suppressed or reduced even under high-voltage and high-temperature conditions, and stability and cycle-life characteristics may be improved.

The foregoing effect is due to a combination of a non-aqueous organic solvent including 0.05 wt% to 10.0 wt% of ethylene carbonate, based on a total amount of the electrolyte solution and a phosphorus-based compound additive including a trialkylsilyl group.

Hereinafter, elements that constitute the rechargeable lithium battery will be described in more detail.

### Additive

The additive includes a phosphorus-based compound including a trialkylsilyl group.

The phosphorus-based compound including the trialkylsilyl group effectively reduces transition metal elution from cobalt-free lithium nickel manganese-based oxide under high-voltage and high-temperature conditions while suppressing or reducing positive electrode structure collapse, thereby improving the stability and cycle-life characteristics of rechargeable lithium batteries.

The additive may include a phosphate-based compound including a trialkylsilyl group, a phosphite-based compound including a trialkylsilyl group, or a combination thereof.

For example, the additive may include a compound represented by Chemical Formula 1, a compound represented by Chemical Formula 2, or a combination thereof:

Chemical Formula 1

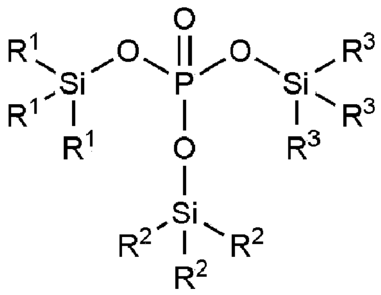

Chemical Formula 2

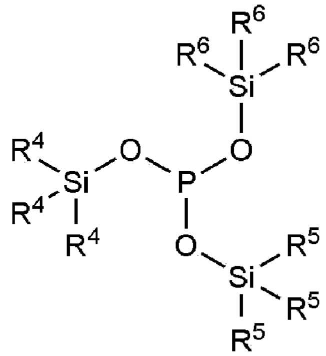

In Chemical Formulas 1 and 2, $R^1$ to $R^6$ are each independently the same or different and are a substituted or unsubstituted C1 to C20 alkyl group.

For example, in Chemical Formulas 1 and 2, $R^1$ to $R^6$ may all be methyl groups. For example, the additive may include trimethylsilylphosphate (TMSPa), trimethylsilylphosphite (TMSPi), or a combination thereof.

The additive is included in an amount of0.05 to10.0 wt%, for example0.5 to8.0 wt%, or, for example,0.1 to5.0 wt%, based on a total amount of the electrolyte solution. Within the foregoing ranges, the cycle-life of a rechargeable lithium battery can be further improved or gases generated from the positive electrode and negative electrode can be effectively controlled if stored at high temperatures.

In some embodiments, the additive may further include at least one of other additives selected from vinylene carbonate (VC), fluoroethylene carbonate (FEC), difluoroethylene carbonate, chloroethylene carbonate, dichloroethylene carbonate, bromoethylene carbonate, dibromoethylene carbonate, nitroethylene carbonate, cyanoethylene carbonate, vinylethylene carbonate (VEC), adiponitrile (AN), succinonitrile (SN), 1,3,6-hexane tricyanide (HTCN), propenesultone (PST), propanesultone (PS), lithium tetrafluoroborate ($LiBF_4$), lithium difluorophosphate ($LiPO_2F_2$), and 2-fluorobiphenyl (2-FBP). The additional additive may produce a synergistic effect if combined with the phosphorus-based compound including the trialkylsilyl group.

The additional additive may be included in an amount of 0.1 to 5.0 wt%, for example 0.1 to 3.0 wt%, or, for example, 0.1 to 1.0 wt%, based on 100 wt% of the electrolyte solution for a rechargeable lithium battery.

If a content of the additive is as described above, it can contribute to improving battery performance by minimizing or reducing the increase in film resistance.

**Non-aqueous Organic Solvent**

The non-aqueous organic solvent serves as a medium that transmits ions taking part in the electrochemical reaction of a battery.

The non-aqueous organic solvent may be a carbonate-based, ester-based solvent, an ether-based solvent, a ketone-based solvent, an alcohol-based solvent, an aprotic solvent, or a combination thereof.

The carbonate-based solvent may include dimethyl carbonate (DMC), diethyl carbonate (DEC), dipropyl carbonate (DPC), methylpropyl carbonate (MPC), ethylpropyl carbonate (EPC), methylethyl carbonate (MEC), ethylene carbonate (EC), propylene carbonate (PC), butylene carbonate (BC), and/or the like. The ester-based solvent may include methyl acetate, ethyl acetate, n-propyl acetate, dimethylacetate, methylpropionate, ethylpropionate, decanolide, mevalonolactone, valerolactone(valerolactone), caprolactone, and/or the like. The ether-based solvent may include dibutyl ether, tetraglyme, diglyme, dimethoxyethane, 2-methyltetrahydrofuran, 2,5-dimethyltetrahydrofuran, and/or tetrahydrofuran. The ketone-based solvent may include cyclohexanone. The alcohol-based solvent may include ethyl alcohol, isopropyl alcohol, and/or the like, and/or the aprotic solvent may include nitriles such as R-CN (wherein R is a C2 to C20 linear, branched, and/or cyclic hydrocarbon group, a double bond, an aromatic ring, and/or an ether group), amides such as, for example, dimethylformamide, dioxolanes such as 1,3-dioxolane and/or 1,4-dioxolane, sulfolanes, and/or the like.

The non-aqueous organic solvents may be used alone or in combination of two or more.

For example, the non-aqueous organic solvent may include less than or equal to5 wt% of ethylene carbonate based on a total amount of the electrolyte solution.

If the content of ethylene carbonate exceeds the above-mentioned range, the activity of Ni increases during high-voltage operation, and the oxidation state of Ni has a strong tendency to be reduced from a tetravalent state to a divalent state, and ethylene carbonate, which has low oxidation stability, undergoes oxidative decomposition, resulting in Ni being eluted and precipitated on the negative electrode.

In some embodiments, the non-aqueous organic solvent may consist only of chain carbonates. In those embodiments, excellent high-temperature storage characteristics can be realized as the resistance increase rate during high-temperature storage is significantly reduced.

In this specification, the meaning of "consisting only of chain carbonates" means that the non-aqueous organic solvent contains, alone or in combination, organic solvents that are not mixed together with cyclic carbonates and belong to the category of chain carbonates. For example, in some embodiments, the electrolyte and/or the non-aqueous organic solvent is substantially free of cyclic carbonates such that the electrolyte and/or the non-aqueous organic solvent includes cyclic carbonates, if at all, only as an incidental impurity. In some embodiments, the electrolyte and/or the non-aqueous organic solvent is completely free of cyclic carbonates.

The chain carbonate may be represented by Chemical Formula 3.

Chemical Formula 3

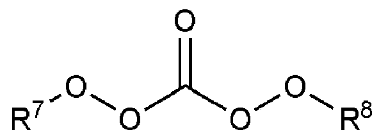

In Chemical Formula 3, $R^7$ and $R^8$ are each independently a substituted or unsubstituted C1 to C20 alkyl group.

For example, $R^7$ and $R^8$ in Chemical Formula 3 may each independently be a substituted or unsubstituted C1 to C10 alkyl group. For example, $R^7$ and $R^8$ may each independently be a substituted or unsubstituted C1 to C5 alkyl group.

For example, $R^7$ and $R^8$ in Chemical Formula 3 may each independently be a substituted or unsubstituted methyl group, a substituted or unsubstituted ethyl group, a substituted or unsubstituted n-propyl group, a substituted or unsubstituted n-butyl group, a substituted or unsubstituted n-pentyl group, a substituted or unsubstituted iso-butyl group, or a substituted or unsubstituted neo-pentyl group.

For example, the non-aqueous organic solvent may be at least two types (or kinds) selected from dimethyl carbonate (DMC), diethyl carbonate (DEC), dipropyl carbonate (DPC), methylpropyl carbonate (MPC), ethylpropyl carbonate (EPC), and ethylmethyl carbonate (EMC).

For example, the non-aqueous organic solvent may be a mixed solvent of dimethyl carbonate (DMC) and ethylmethyl carbonate (EMC).

The non-aqueous organic solvent may include ethylmethyl carbonate (EMC) and dimethyl carbonate (DMC) in a volume ratio of 10:90 to 50:50.

In terms of improving battery characteristics, the non-aqueous organic solvent may include more than 50 volume% of dimethyl carbonate (DMC).

The non-aqueous organic solvent may include ethylmethyl carbonate (EMC) and dimethyl carbonate (DMC) in a

volume ratio of 10:90 to 40:60, or 10:90 to 30:70.

**Lithium Salt**

The lithium salt dissolved in the organic solvent supplies lithium ions in a battery, enables a basic operation of a rechargeable lithium battery, and improves transportation of the lithium ions between positive and negative electrodes. Examples of the lithium salt may include at least one selected from $LiPF_6$, $LiBF_4$, $LiSbF_6$, $LiAsF_6$, $LiClO_4$, $LiAlO_2$, $LiAlCl_4$, $LiPO_2F_2$, LiCl, LiI, $LiN(SO_3C_2F_5)_2$, $Li(FSO_2)_2N$ (lithium bis(fluorosulfonyl)imide, LiFSI), $LiC_4F_9SO_3$, $LiN(C_pF_{2p+1}SO_2)(C_qF_{2q+1}SO_2)$, wherein p and q are integers of 1 to 20, lithium trifluoromethane sulfonate, lithium tetrafluoroethanesulfonate, lithium difluorobis(oxalato)phosphate (LiDFOB), and lithium bis(oxalato) borate (LiBOB).

**Positive Electrode Active Material**

The positive electrode active material may include a cobalt-free lithium nickel manganese-based oxide.

In the present disclosure, the cobalt-free lithium nickel manganese-based oxide as a positive electrode active material means a positive electrode active material composed mainly of nickel, manganese, etc. without including cobalt in the composition of the positive electrode active material. For example, in some embodiments, the cobalt-free lithium nickel manganese-based oxide and/or the positive electrode active material is substantially free of cobalt such that it includes cobalt, if at all, only as an incidental impurity. In some embodiments, the cobalt-free lithium nickel manganese-based oxide and/or the positive electrode active material is completely free of cobalt.

The cobalt-free lithium nickel manganese-based oxide may include at least one type (or kind) of lithium composite oxides represented by Chemical Formula 3:

Chemical Formula 4 $Li_aNi_xMn_yM^1_zM^2_wO_{2\pm b}X_c$.

In Chemical Formula 4,

$0.5 \le a < 1.8$, $0 \le b \le 0.1$, $0 \le c \le 0.1$, $0 \le w < 0.1$, $0.6 \le x < 1.0$, $0 < y < 0.4$, $0 < z < 0.1$, $w + x + y + z = 1$, $M^1$ and $M^2$ are each independently one or more elements selected from Al, Mg, Ti, Zr, Cr, Sr, V, B, W, Mo, Nb, Si, Ba, Ca, Ce, Cr, Fe, and Nb, and X is one or more elements selected from S, F, P, and Cl.

For example, Chemical Formula 4 may be represented by Chemical Formula 4-1:

Chemical Formula 4-1 $Li_aNi_{x1}Mn_{y1}Al_{z1}M^2_{w1}O_{2\pm b}X_c$.

In Chemical Formula 4-1,

$0.5 \le a < 1.8$, $0 \le b \le 0.1$, $0 \le c \le 0.1$, $0 \le w1 < 0.1$, $0.6 \le x1 < 1.0$, $0 < y1 < 0.4$, $0 < z1 < 0.1$, $w1 + x1 + y1 + z1 = 1$, $M^2$ is one or more elements selected from Mg, Ti, Zr, Cr, Sr, V, B, W, Mo, Nb, Si, Ba, Ca, Ce, Cr, Fe, and Nb, and X is one or more elements selected from S, F, P, and Cl.

In Chemical Formula 4-1, x1 may be $0.6 \le x1 \le 0.79$, y1 may be $0.2 \le y1 \le 0.39$, and z1 may be $0.01 \le z1 < 0.1$.

**Positive Electrode**

The positive electrode for a rechargeable lithium battery may include a current collector and a positive electrode active material layer on the current collector. The positive electrode active material layer may include a positive electrode active material and may further include a binder and/or a conductive material (e.g., an electrically conductive material).

For example, the positive electrode may further include an additive that can function as a sacrificial positive electrode.

A content of the positive electrode active material may be 90 wt% to 99.5 wt%, and a content of the binder and the conductive material may be 0.5 wt% to 5 wt%, respectively based on 100 wt% of the positive electrode active material layer.

The binder serves to attach the positive electrode active material particles well to each other and also to attach the positive electrode active material well to the current collector. Examples of the binder may include polyvinyl alcohol, carboxymethyl cellulose, hydroxypropyl cellulose, diacetyl cellulose, polyvinylchloride, carboxylated polyvinylchloride, polyvinylfluoride, a polymer including ethylene oxide, polyvinylpyrrolidone, polyurethane, polytetrafluoroethylene, polyvinylidene fluoride, polyethylene, polypropylene, a styrene-butadiene rubber, a (meth)acrylated styrene-butadiene rubber, an epoxy resin, a (meth)acrylic resin, a polyester resin, nylon, and the like, but are not limited thereto.

The conductive material may be used to impart conductivity (e.g., electrical conductivity) to the electrode and any suitable material that does not cause chemical change (e.g., does not cause an undesirable chemical change in the rechargeable lithium battery) and conducts electrons can be used in the battery. Examples of the conductive material may include a carbon-based material such as natural graphite, artificial graphite, carbon black, acetylene black, ketjen black, a carbon fiber, a carbon nanofiber, and carbon nanotube; a metal-based material including copper, nickel, aluminum, silver, etc., in a form of a metal powder and/or a metal fiber; a conductive polymer (e.g., an electrically conductive polymer) such as a polyphenylene derivative; or a mixture thereof.

The current collector may include Al, but is not limited thereto.

## Negative Electrode Active Material

The negative electrode active material may include a material that reversibly intercalates/deintercalates lithium ions, a lithium metal, a lithium metal alloy, a material capable of doping/dedoping lithium, and/or a transition metal oxide.

The material that reversibly intercalates/deintercalates lithium ions may include a carbon-based negative electrode active material, for example, crystalline carbon, amorphous carbon or a combination thereof. The crystalline carbon may be graphite such as irregular-shaped, sheet-shaped, flake-shaped, sphere-shaped, and/or fiber-shaped natural graphite and/or artificial graphite. The amorphous carbon may be a soft carbon, a hard carbon, a mesophase pitch carbonization product, calcined coke, and/or the like.

The lithium metal alloy may include lithium and a metal selected from Na, K, Rb, Cs, Fr, Be, Mg, Ca, Sr, Si, Sb, Pb, In, Zn, Ba, Ra, Ge, Al, and Sn.

The material capable of doping/dedoping lithium may be a Si-based negative electrode active material and/or a Sn-based negative electrode active material. The Si-based negative electrode active material may include silicon, a silicon-carbon composite, $SiO_x$ ($0 < x < 2$), and/or a Si-Q alloy (wherein Q is selected from an alkali metal, an alkaline-earth metal, a Group 13 element, a Group 14 element (excluding Si), a Group 15 element, a Group 16 element, a transition metal, a rare earth element, and a combination thereof). The Sn-based negative electrode active material may include Sn, $SnO_2$, a Sn-based alloy, or a combination thereof.

The silicon-carbon composite may be a composite of silicon and amorphous carbon. According to some embodiments, the silicon-carbon composite may be in a form of silicon particles and amorphous carbon coated on the surface of the silicon particles. For example, the silicon-carbon composite may include a secondary particle (core) in which primary silicon particles are assembled, and an amorphous carbon coating layer (shell) on the surface of the secondary particle. The amorphous carbon may also be between the primary silicon particles, and, for example, the primary silicon particles may be coated with the amorphous carbon. The secondary particle may exist dispersed in an amorphous carbon matrix.

The silicon-carbon composite may further include crystalline carbon. For example, the silicon-carbon composite may include a core including crystalline carbon and silicon particles and an amorphous carbon coating layer on a surface of the core.

The Si-based negative electrode active material and/or the Sn-based negative electrode active material may be used in combination with a carbon-based negative electrode active material.

## Negative Electrode

A negative electrode for a rechargeable lithium battery includes a current collector and a negative electrode active material layer on the current collector. The negative electrode active material layer includes a negative electrode active material and may further include a binder and/or a conductive material (e.g., an electrically conductive material).

For example, the negative electrode active material layer may include 90 wt% to 99 wt% of the negative electrode active material, 0.5 wt% to 5 wt% of the binder, and 0.5 wt% to 5 wt% of the conductive material.

The binder may serve to attach the negative electrode active material particles well to each other and also to attach the negative electrode active material well to the current collector. The binder may include a non-aqueous binder, an aqueous binder, a dry binder, or a combination thereof.

The non-aqueous binder may include polyvinyl chloride, carboxylated polyvinyl chloride, polyvinyl fluoride, an ethylene propylene copolymer, polystyrene, polyurethane, polytetrafluoroethylene, polyvinylidene fluoride, polyethylene, polypropylene, polyamideimide, polyimide, or a combination thereof.

The aqueous binder may be selected from a styrene-butadiene rubber, a (meth)acrylated styrene-butadiene rubber, a (meth)acrylonitrile-butadiene rubber, (meth)acrylic rubber, a butyl rubber, a fluoro rubber, polyethylene oxide, polyvinylpyrrolidone, polyepichlorohydrin, polyphosphazene, poly(meth)acrylonitrile, an ethylene propylene diene copolymer, polyvinylpyridine, chlorosulfonated polyethylene, latex, a polyester resin, a (meth)acrylic resin, a phenol resin, an epoxy resin, polyvinyl alcohol, and a combination thereof.

If an aqueous binder is used as the negative electrode binder, it may further include a cellulose-based compound

capable of imparting or increasing viscosity. The cellulose-based compound includes one or more of carboxylmethyl cellulose, hydroxypropylmethyl cellulose, methyl cellulose, or alkali metal salts thereof. The alkali metal may be Na, K, and/or Li.

The dry binder may be a polymer material capable of being fiberized, and may be, for example, polytetrafluoroethylene, polyvinylidene fluoride, polyvinylidene fluoride-hexafluoropropylene copolymer, polyethylene oxide, or a combination thereof.

The conductive material may be used to impart conductivity (e.g., electrical conductivity) to the electrode and any suitable material that does not cause chemical change (e.g., does not cause an undesirable chemical change in the rechargeable lithium battery) and conducts electrons can be used in the battery. Examples of the conductive material may be a carbon-based material such as natural graphite, artificial graphite, carbon black, acetylene black, ketjen black, a carbon fiber, a carbon nanofiber, a carbon nanotube, and the like; a metal-based material such as copper, nickel, aluminum silver, and the like in a form of a metal powder and/or a metal fiber; a conductive polymer (e.g., an electrically conductive polymer) such as a polyphenylene derivative; or a mixture thereof.

The negative electrode current collector may include one selected from a copper foil, a nickel foil, a stainless steel foil, a titanium foil, a nickel foam, a copper foam, a polymer substrate coated with a conductive metal (e.g., an electrically conductive metal), and a combination thereof, but is not limited thereto.

**Separator**

The rechargeable lithium battery may further include a separator between the negative electrode and the positive electrode, depending on a kind of the battery. Examples of a suitable separator material include polyethylene, polypropylene, polyvinylidene fluoride, and multi-layers thereof such as a polyethylene/polypropylene double-layered separator, a polyethylene/polypropylene/polyethylene triple-layered separator, and a polypropylene/polyethylene/polypropylene triple-layered separator.

The separator may include a porous substrate and a coating layer including an organic material, an inorganic material, or a combination thereof on one or both surfaces (e.g., opposing surfaces) of the porous substrate.

The porous substrate may be a polymer film formed of any one selected from a polymer, and/or a copolymer or mixture of two or more of polyolefin such as polyethylene and/or polypropylene, a polyester such as polyethyleneterephthalate, or polybutyleneterephthalate, polyacetal, polyamide, polyimide, polycarbonate, polyether ketone, polyaryl ether ketone, polyether imide, polyamideimide, polybenzimidazole, polyether sulfone, polyphenyleneoxide, a cyclic olefin copolymer, polyphenylenesulfide, polyethylenenaphthalate, a glass fiber, TEFLON (tetrafluoroethylene), and polytetrafluoroethylene.

The organic material may include a polyvinylidene fluoride-based polymer and/or a (meth)acrylic-based polymer.

The inorganic material may include inorganic particles selected from $Al_2O_3$, $SiO_2$, $TiO_2$, $SnO_2$, $CeO_2$, MgO, NiO, CaO, GaO, ZnO, $ZrO_2$, $Y_2O_3$, SrTiOs, $BaTiO_3$, $Mg(OH)_2$, boehmite, and a combination thereof, but is not limited thereto.

The organic material and the inorganic material may be mixed together in one coating layer, or a coating layer including an organic material and a coating layer including an inorganic material may be stacked.

**Rechargeable Lithium Battery**

The accompanying drawing is a partially exploded perspective view of a rechargeable lithium battery according to some embodiments. Referring to the accompanying drawing, the rechargeable lithium battery 100 may include an electrode assembly 40 including a separator 30 between a positive electrode 10 and a negative electrode 20, and a case 50 in which the electrode assembly 40 is housed. The positive electrode 10, the negative electrode 20, and the separator 30 may be impregnated with an electrolyte solution. The rechargeable lithium battery 100 may include a sealing member 60 that seals the case 50 as shown in the accompanying drawing.

The rechargeable lithium battery according to some embodiments can be applied to various suitable types (or kinds) of batteries such as cylindrical, prismatic, and/or pouch types, but the present disclosure is not limited thereto.

The rechargeable lithium battery according to some embodiments may be applied to automobiles, mobile phones, and/or various suitable types (or kinds) of electrical devices, but the present disclosure is not limited thereto.

**Charge Upper Limit Voltage**

The rechargeable lithium battery may have an upper charge limit voltage of greater than or equal to 4.35 V, for example 4.35 V to 4.55 V, for example, 4.35 V to 4.75 V.

Hereinafter, examples of the present disclosure and comparative examples are described. These examples, however, are not in any sense to be interpreted as limiting the scope of the present disclosure.

**(Preparation Examples/Comparative Preparation Examples)**

**Preparation Example 1**

$LiPF_6$ was dissolved at a concentration of 1.5 M in a non-aqueous organic solvent including ethylmethyl carbonate (EMC) and dimethyl carbonate (DMC) mixed together at a volume ratio of 20:80, and 0.1 wt% of trimethylsilyl phosphate (TMSPa) was added to prepare an electrolyte solution.

However, in the composition of the electrolyte solution, "wt%" refers to a relative weight of the additive based on a total weight of the electrolyte solution including the additive (lithium salt+non-aqueous organic solvent+additive). The same applies below.

**Preparation Example 2**

A rechargeable lithium battery cell was manufactured in the same manner as Example 1, except that 1.0 wt% of trimethylsilyl phosphate was added.

**Preparation Example 3**

A rechargeable lithium battery cell was manufactured in the same manner as Example 1, except that 5.0 wt% of trimethylsilyl phosphate was added.

**Preparation Example 4**

A rechargeable lithium battery cell was manufactured in the same manner as Example 1, except that 0.1 wt% of trimethylsilyl phosphite (TMSPi) was added.

**Preparation Example 5**

A rechargeable lithium battery cell was manufactured in the same manner as Example 1, except that 1.0 wt% of trimethylsilyl phosphite was added.

**Preparation Example 6**

A rechargeable lithium battery cell was manufactured in the same manner as Example 1, except that 5.0 wt% of trimethylsilyl phosphite was added.

**Comparative Preparation Example 1**

$LiPF_6$ was dissolved at a concentration of 1.5 M in a non-aqueous organic solvent containing ethylmethyl carbonate (EMC) and dimethyl carbonate (DMC) mixed together at a volume ratio of 20:80, and 20 wt% of ethylene carbonate (EC), based on a total amount of the electrolyte solution, was added to prepare an electrolyte solution.

**Comparative Preparation Example 2**

An electrolyte solution was prepared by dissolving $LiPF_6$ at a concentration of 1.5 M in a non-aqueous organic solvent containing ethylmethyl carbonate (EMC) and dimethyl carbonate (DMC) mixed together at a volume ratio of 20:80.

**Example of using $LiNi_{0.75}Mn_{0.23}Al_{0.02}O_2$ as Positive Electrode Active Material**

**Example 1-1**

$LiNi_{0.75}Mn_{0.23}Al_{0.02}O_2$ as a positive electrode active material, polyvinylidene fluoride as a binder, and acetylene black as a conductive material were mixed together in a weight ratio of 96:3:1 and then, dispersed in N-methyl pyrrolidone to prepare a positive electrode active material slurry.

The positive electrode active material slurry was coated to be 15 $\mu$m thick on an Al foil, dried at 100 °C, and pressed to manufacture a positive electrode.

A negative electrode active material slurry was prepared by using a mixture of artificial graphite and an Si-C composite in a weight ratio of 93:7 as a negative electrode active material, mixing together the negative electrode active

material, a styrene-butadiene rubber binder, and carboxylmethyl cellulose in a weight ratio of 98:1:1, and dispersing the mixture in distilled water.

Herein, the Si-C composite included artificial graphite and silicon particles as a core and coal pitch coated on the core surface.

The negative electrode active material slurry was coated on a 10 μm-thick Cu foil, dried at 100 °C, and pressed to manufacture a negative electrode.

The manufactured positive and negative electrodes were assembled with a 10 μm-thick polyethylene separator to manufacture an electrode assembly, and the electrolyte solution of Preparation Example 1 was injected thereinto to manufacture a rechargeable lithium battery cell.

**Example 1-2**

A rechargeable lithium battery cell was manufactured in the same manner as in Example 1-1 except that the electrolyte solution of Preparation Example 2 was used.

**Example 1-3**

A rechargeable lithium battery cell was manufactured in the same manner as in Example 1-1 except that the electrolyte solution of Preparation Example 3 was used.

**Example 1-4**

A rechargeable lithium battery cell was manufactured in the same manner as in Example 1-1 except that the electrolyte solution of Preparation Example 4 was used.

**Example 1-5**

A rechargeable lithium battery cell was manufactured in the same manner as in Example 1-1 except that the electrolyte solution of Preparation Example 5 was used.

**Example 1-6**

A rechargeable lithium battery cell was manufactured in the same manner as in Example 1-1 except that the electrolyte solution of Preparation Example 6 was used.

**Comparative Example 1-1**

A rechargeable lithium battery cell was manufactured in the same manner as in Example 1-1 except that the electrolyte solution of Comparative Preparation Example 1 was used.

**Comparative Example 1-2**

A rechargeable lithium battery cell was manufactured in the same manner as in Example 1-1 except that the electrolyte solution of Comparative Preparation Example 2 was used.

**Example of using $LiCoO_2$ as Positive Electrode Active Material**

**Comparative Example 2-1**

A rechargeable lithium battery cell was manufactured in the same manner as in Comparative Example 1-1 except that $LiCoO_2$ was used as a positive electrode active material.

**Comparative Example 2-2**

A rechargeable lithium battery cell was manufactured in the same manner as in Comparative Example 1-2 except that $LiCoO_2$ was used as a positive electrode active material.

**Comparative Example 2-3**

A rechargeable lithium battery cell was manufactured in the same manner as in Example 1-1 except that $LiCoO_2$ was used as a positive electrode active material.

**Comparative Example 2-4**

A rechargeable lithium battery cell was manufactured in the same manner as in Example 1-2 except that $LiCoO_2$ was used as a positive electrode active material.

**Comparative Example 2-5**

A rechargeable lithium battery cell was manufactured in the same manner as in Example 1-3 except that $LiCoO_2$ was used as a positive electrode active material.

**Comparative Example 2-6**

A rechargeable lithium battery cell was manufactured in the same manner as in Example 1-4 except that $LiCoO_2$ was used as a positive electrode active material.

**Comparative Example 2-7**

A rechargeable lithium battery cell was manufactured in the same manner as in Example 1-5 except that $LiCoO_2$ was used as a positive electrode active material.

**Comparative Example 2-8**

A rechargeable lithium battery cell was manufactured in the same manner as in Example 1-6 except that $LiCoO_2$ was used as a positive electrode active material.

**Example of using $LiNi_{0.94}Co_{0.03}Al_{0.03}O_2$ as Positive Electrode Active Material**

**Comparative Example 3-1**

A rechargeable lithium battery cell was manufactured in the same manner as in Comparative Example 1-1 except that $LiNi_{0.94}Co_{0.03}Al_{0.03}O_2$ was used as a positive electrode active material.

**Comparative Example 3-2**

A rechargeable lithium battery cell was manufactured in the same manner as in Comparative Example 1-2 except that $LiNi_{0.94}Co_{0.03}Al_{0.03}O_2$ was used as a positive electrode active material.

**Comparative Example 3-3**

A rechargeable lithium battery cell was manufactured in the same manner as in Example 1-1 except that $LiNi_{0.94}Co_{0.03}Al_{0.03}O_2$ was used as a positive electrode active material.

**Comparative Example 3-4**

A rechargeable lithium battery cell was manufactured in the same manner as in Example 1-2 except that $LiNi_{0.94}Co_{0.03}Al_{0.03}O_2$ was used as a positive electrode active material.

**Comparative Example 3-5**

A rechargeable lithium battery cell was manufactured in the same manner as in Example 1-3 except that $LiNi_{0.94}Co_{0.03}Al_{0.03}O_2$ was used as a positive electrode active material.

**Comparative Example 3-6**

A rechargeable lithium battery cell was manufactured in the same manner as in Example 1-4 except that $LiNi_{0.94}Co_{0.03}Al_{0.03}O_2$ was used as a positive electrode active material.

**Comparative Example 3-7**

A rechargeable lithium battery cell was manufactured in the same manner as in Example 1-5 except that $LiNi_{0.94}Co_{0.03}Al_{0.03}O_2$ was used as a positive electrode active material.

**Comparative Example 3-8**

A rechargeable lithium battery cell was manufactured in the same manner as in Example 1-6 except that $LiNi_{0.94}Co_{0.03}Al_{0.03}O_2$ was used as a positive electrode active material.

**Evaluations**

**Evaluation 1: Evaluation of High-temperature Storage Characteristics**

The rechargeable lithium battery cells of the examples and the comparative examples were measured with respect to △V/△I (voltage change/current change) to obtain initial DC internal resistance (DCIR) and after setting an internal maximum energy sate inside the cells to a full-charge state (SOC 100%) and storing the cells in this state at a high temperature of 60 °C for 30 days, remeasured with respect to DC internal resistance, which were used to calculate a DCIR increase rate (%) according to Equation 1, and the results are shown in Table 1.

Equation 1

$$\text{DCIR increase rate} = \{(\text{DCIR after 30 days} - \text{initial DCIR}) / \text{initial DCIR}\}$$

Table 1

| | Positive electrode active material | Electrolyte solution | Initial DCIR (mOhm) | DCIR after high-temperature (60 °C) storage for 30 days (mOhm) | DCIR increase rate (60 °C, 30 days) (%) |
|---|---|---|---|---|---|
| Comp. Ex. 1-1 (Ref.) | $LiNi_{0.75}Mn_{0.23}Al_{0.02}O_2$ | Comparative Preparation Example 1 | 41.37 | 56.01 | 135.4 |
| Comp. Ex. 1-2 | | Comparative Preparation Example 2 | 38.54 | 47.71 | 123.8 |
| Ex. 1-1 | | Preparation Example 1 | 38.61 | 46.53 | 120.5 |
| Ex. 1-2 | | Preparation Example 2 | 39.21 | 45.99 | 117.3 |
| Ex. 1-3 | | Preparation Example 3 | 41.23 | 52.64 | 127.7 |
| Ex. 1-4 | | Preparation Example 4 | 38.74 | 46.12 | 119.1 |
| Ex. 1-5 | | Preparation Example 5 | 39.12 | 45.93 | 117.4 |
| Ex. 1-6 | | Preparation Example 6 | 41.02 | 52.12 | 127.1 |

(continued)

| | Positive electrode active material | Electrolyte solution | Initial DCIR (mOhm) | DCIR after high-temperature (60 °C) storage for 30 days (mOhm) | DCIR increase rate (60 °C, 30 days) (%) |
|---|---|---|---|---|---|
| Comp. Ex. 2-1 | $LiCoO_2$ | Comparative Preparation Example 1 | 40.28 | 51.08 | 126.8 |
| Comp. Ex. 2-2 | | Comparative Preparation Example 2 | 39.98 | 49.82 | 124.6 |
| Comp. Ex. 2-3 | | Preparation Example 1 | 40.2 | 49.3 | 122.5 |
| Comp. Ex. 2-4 | | Preparation Example 2 | 40.5 | 48.7 | 120.4 |
| Comp. Ex. 2-5 | | Preparation Example 3 | 41.1 | 50.7 | 123.6 |
| Comp. Ex. 2-6 | | Preparation Example 4 | 40.2 | 49.2 | 122.2 |
| Comp. Ex. 2-7 | | Preparation Example 5 | 40.5 | 48.7 | 120.1 |
| Comp. Ex. 2-8 | | Preparation Example 6 | 41.1 | 50.9 | 123.9 |
| Comp. Ex. 3-1 | $LiNi_{0.94}Co_{0.03}Al_{0.03}O_2$ | Comparative Preparation Example 1 | 40.6 | 50.0 | 123.1 |
| Comp. Ex. 3-2 | | Comparative Preparation Example 2 | 40.3 | 52.5 | 130.2 |
| Comp. Ex. 3-3 | | Preparation Example 1 | 41.0 | 53.2 | 129.8 |
| Comp. Ex. 3-4 | | Preparation Example 2 | 41.3 | 51.8 | 125.6 |
| Comp. Ex. 3-5 | | Preparation Example 3 | 42.1 | 54.7 | 130.0 |
| Comp. Ex. 3-6 | | Preparation Example 4 | 40.9 | 52.8 | 129.2 |
| Comp. Ex. 3-7 | | Preparation Example 5 | 41.2 | 51.9 | 125.8 |
| Comp. Ex. 3-8 | | Preparation Example 6 | 42.0 | 54.6 | 130.1 |

**Evaluation 2: Measurement of Amount of Gas Generated after High-temperature Storage**

Each of the rechargeable lithium battery cells of the examples and the comparative examples was allowed to stand at 60 °C for 10 days or 30 days and measured with respect to an amount (ml) of generated gas on the 10$^{th}$ day or the 30$^{th}$ day by using a refinery gas analyzer (RGA), and the results are shown in Table 3.

Table 2

| | Battery cells | | Amount of gas generated after high-temperature (60 °C) | | |
|---|---|---|---|---|---|
| | Positive electrode active material | Electrolyte solution | 10 days (mL) | 30 days (mL) | Amount decrease rate relative to 30 days Ref. (%) |
| Comp. Ex. 1-1 (Ref.) | $LiNi_{0.75}Mn_{0.23}Al_{0.0 2}O_2$ | Comparative Preparation Example 1 | 16.82 | 41.31 | reference 0% |
| Comp. Ex. 1-2 | | Comparative Preparation Example 2 | 13.66 | 32.68 | 20.9 |
| Example 1-1 | | Preparation Example 1 | 13.13 | 32.21 | 22.0 |
| Example 1-2 | | Preparation Example 2 | 12.35 | 29.37 | 28.9 |
| Example 1-3 | | Preparation Example 3 | 13.56 | 33.01 | 20.1 |
| Example 1-4 | | Preparation Example 4 | 13.25 | 31.97 | 22.6 |
| Example 1-5 | | Preparation Example 5 | 12.46 | 28.83 | 30.2 |
| Example 1-6 | | Preparation Example 6 | 13.49 | 32.66 | 20.9 |

**Evaluation 3: Evaluation of High-temperature Cycle-life Characteristics**

The rechargeable lithium battery cells of the examples and the comparative examples were once charged and discharged at 0.2 C to measure charge and discharge capacity.

In addition, the rechargeable lithium battery cells of the examples and the comparative examples were charged to an upper voltage (4.35 V or 4.45 V) and discharged to 2.5 V at a constant current of 0.2 C to measure initial discharge capacity at each charge voltage.

Subsequently, the cells were 200 cycles charged at 0.33 C (CC/CV, 4.35 V or 4.45 V, 0.025 C cut-off)/ discharged at 1.0 C (CC, 2.5 V cut-off) at 45 °C to measure discharge capacity. A ratio of discharge capacity to the initial discharge capacity was calculated, and the results are shown as capacity retention in Table 3.

Table 3

| | Rechargeable lithium battery cell | | High-temperature cycle-life | | | |
|---|---|---|---|---|---|---|
| | | | Charge upper voltage: 4.45 V | | Charge upper voltage: 4.35 V | |
| | Positive electrode active material | Electrolyte solution | Capacity retention rate @200 cycles (%) | Increase rate relative to Comparativ e Example 1 (%) | Capacity retention rate @200 cycles (%) | Increase rate relative to Comparativ e Example 1 (%) |
| Comp. Ex. 1-1 (Ref.) | $LiNi_{0.75}Mn_{0.23}Al_{0.02}O_2$ | Comparative Preparation Example 1 | 71.8 | reference | 75.4 | reference |
| Comp. Ex. 1-2 | | Comparative Preparation Example 2 | 84.9 | 18.2 | 83.1 | 10.2 |
| Example 1-1 | | Preparation Example 1 | 85.1 | 18.5 | 85.7 | 13.7 |
| Example 1-2 | | Preparation Example 2 | 89.5 | 24.7 | 89.6 | 18.8 |
| Example 1-3 | | Preparation Example 3 | 84.2 | 17.3 | 85.4 | 13.3 |
| Example 1-4 | | Preparation Example 4 | 84.8 | 18.1 | 85.3 | 13.1 |
| Example 1-5 | | Preparation Example 5 | 89.9 | 25.2 | 89.8 | 19.1 |
| Example 1-6 | | Preparation Example 6 | 84.1 | 17.1 | 85.1 | 12.9 |

Referring to Table 1, if a cobalt-free lithium nickel manganese-based oxide positive electrode active material was used, compared with a cobalt-containing positive electrode active material, the rechargeable lithium battery cells exhibited that a DCIR increase rate generally decreased.

Furthermore, referring to Tables 2 and 3, even if the cobalt-free lithium nickel manganese-based oxide positive electrode active material was used, if an electrolyte solution including a lithium salt, a non-aqueous organic solvent, and an additive including a phosphorus-based compound including a trialkylsilyl group were used together, stability and cycle-life characteristics of the rechargeable lithium battery cells were all improved.

On the other hand, the examples exhibited that a DCIR increase rate, storage characteristics at a high temperature, and high temperature charge and discharge characteristics varied according to a content of the additive. Considering this, the content of the additive may be suitably or appropriately controlled.

**Description of Symbols**

100: rechargeable lithium battery

10: positive electrode

20: negative electrode

30: separator

50: case

60: sealing member

**Claims**

1. A rechargeable lithium battery (100), comprising:

a positive electrode (10) comprising a positive electrode active material;
a negative electrode (20) comprising a negative electrode active material; and
an electrolyte solution comprising a lithium salt, a non-aqueous organic solvent, and an additive,
wherein the positive electrode active material comprises a cobalt-free lithium nickel manganese-based oxide, the non-aqueous organic solvent comprises 0.05 to10 wt% of ethylene carbonate based on a total amount of the electrolyte solution, and
the additive comprises a phosphorus-based compound comprising a trialkylsilyl group.

2. The rechargeable lithium battery (100) as claimed in claim 1, wherein:
the additive comprises a phosphate-based compound comprising a trialkylsilyl group, a phosphite-based compound comprising a trialkylsilyl group, or a combination thereof.

3. The rechargeable lithium battery (100) as claimed in claim 1, wherein:

the additive comprises a compound represented by Chemical Formula 1, a compound represented by Chemical Formula 2, or a combination thereof:

Chemical Formula 1

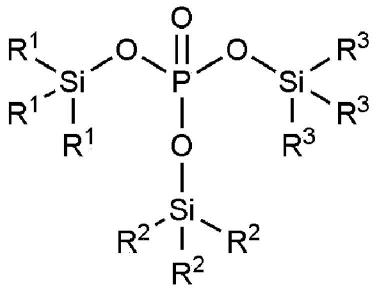

Chemical Formula 2

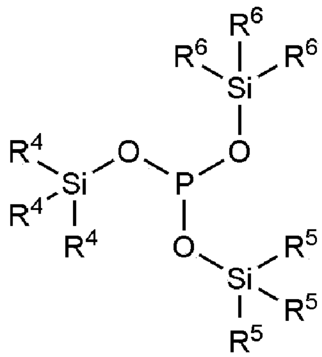

wherein, in Chemical Formulas 1 and 2,

$R^1$ to $R^6$ are each independently the same or different and are a substituted or unsubstituted C1 to C20 alkyl group,
wherein "substituted" refers to replacement of at least one hydrogen by deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, and a cyano group.

4. The rechargeable lithium battery (100) as claimed in claim 1, wherein:

the additive comprises trimethylsilylphosphate (TMSPa), trimethylsilylphosphite (TMSPi), or a combination thereof.

**5.** The rechargeable lithium battery (100) as claimed in any one of the preceding claims, wherein:
the additive is included in an amount of 0.1 to10.0 wt% based on the total amount of the electrolyte solution.

**6.** The rechargeable lithium battery (100) as claimed in any one of the preceding claims, wherein:

the additive further comprises at least one of other additives selected from vinylene carbonate (VC), fluoroethylene carbonate (FEC), difluoroethylene carbonate,
chloroethylene carbonate, dichloroethylene carbonate, bromoethylene carbonate,
dibromoethylene carbonate, nitroethylene carbonate, cyanoethylene carbonate,
vinylethylene carbonate (VEC), adiponitrile (AN), succinonitrile (SN), 1,3,6-hexane tricyanide (HTCN), propenesultone (PST), propanesultone (PS), lithium tetrafluoroborate ($LiBF_4$), lithium difluorophosphate ($LiPO_2F_2$), and 2-fluorobiphenyl (2-FBP).

**7.** The rechargeable lithium battery (100) as claimed in any one of the preceding claims, wherein:
the non-aqueous organic solvent consists only of chain carbonates.

**8.** The rechargeable lithium battery (100) as claimed in claim 7, wherein:

the chain carbonate is represented by Chemical Formula 3:

Chemical Formula 3

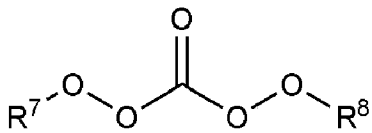

wherein, in Chemical Formula 3
$R^7$ and $R^8$ are each independently a substituted or unsubstituted C1 to C20 alkyl group, wherein "substituted" refers to replacement of at least one hydrogen by deuterium, a halogen, a hydroxyl group, an amino group, a C1 to C30 amine group, a nitro group, a C1 to C40 silyl group, a C1 to C30 alkyl group, a C1 to C10 alkylsilyl group, a C6 to C30 arylsilyl group, a C3 to C30 cycloalkyl group, a C3 to C30 heterocycloalkyl group, a C6 to C30 aryl group, a C2 to C30 heteroaryl group, a C1 to C20 alkoxy group, a C1 to C10 fluoroalkyl group, and a cyano group.

**9.** The rechargeable lithium battery (100) as claimed in claim 8, wherein:
the non-aqueous organic solvent comprises at least two kinds selected from dimethyl carbonate (DMC), diethyl carbonate (DEC), dipropyl carbonate (DPC), methylpropyl carbonate (MPC), ethylpropyl carbonate (EPC), and ethylmethyl carbonate (EMC).

**10.** The rechargeable lithium battery (100) as claimed in claim 9, wherein:
the non-aqueous organic solvent comprises ethylmethyl carbonate (EMC) and dimethyl carbonate (DMC) in a volume ratio of10:90 to50:50.

**11.** The rechargeable lithium battery (100) as claimed in any one of the preceding claims, wherein:

the lithium salt comprises at least one selected from $LiPF_6$, $LiBF_4$, lithium difluoro(oxalato)borate (LiDFOB), $LiPO_2F_2$, $LiSbF_6$, $LiAsF_6$, $Li(FSO_2)_2N$ (lithium bis(fluorosulfonyl)imide: LiFSI), $LiC_4F_9SO_3$, $LiClO_4$, $LiAlO_2$, $LiAlCl_4$,
$LiN(C_pF_{2p+1}SO_2)(C_qF_{2q+1}SO_2)$, wherein p and q are integers of 1 to 20, LiCl, LiI, and $LiB(C_2O_4)_2$ (lithium bis(oxalato) borate: LiBOB).

**12.** The rechargeable lithium battery (100) as claimed in any one of the preceding claims, wherein:

the cobalt-free lithium nickel manganese-based oxide comprises a lithium composite oxide represented by Chemical Formula 3:

Chemical Formula 4 $Li_aNi_xMn_yM^1_zM^2_wO_{2\pm b}X_c$

wherein, in Chemical Formula 4,

$0.5 \leq a < 1.8$, $0 \leq b \leq 0.1$, $0 \leq c \leq 0.1$, $0 \leq w < 0.1$, $0.6 \leq x < 1.0$, $0 < y < 0.4$, $0 < z < 0.1$, $w + x + y + z= 1$, $M^1$ and $M^2$ are each independently one or more elements selected from Al, Mg, Ti, Zr, Cr, Sr, V, B, W, Mo, Nb, Si, Ba, Ca, Ce, Cr, Fe, and Nb, and X is one or more elements selected from S, F, P, and Cl.

**13.** The rechargeable lithium battery (100) as claimed in claim 12, wherein: Chemical Formula 4 is represented by Chemical Formula 4-1:

Chemical Formula 4-1 $Li_aNi_{x1}Mn_{y1}Al_{z1}M^2_{w1}O_{2\pm b}X_c$

wherein, in Chemical Formula 3-1,

$0.5 \leq a < 1.8$, $0 \leq b \leq 0.1$, $0 \leq c \leq 0.1$, $0 \leq w1 < 0.1$, $0.6 \leq x1 < 1.0$, $0 < y1 < 0.4$, $0 < z1 < 0.1$, $w1 + x1 + y1 + z1 = 1$, $M^2$ is each independently one or more elements selected from Mg, Ti, Zr, Cr, Sr, V, B, W, Mo, Nb, Si, Ba, Ca, Ce, Cr, Fe, and Nb, and X is one or more elements selected from S, F, P, and Cl.

**14.** The rechargeable lithium battery (100) as claimed in claim 13, wherein:
in Chemical Formula 4-1, x1 is $0.6 \leq x1 \leq 0.79$, y1 is $0.2 \leq y1 \leq 0.39$, and z1 is $0.01 \leq z1 < 0.1$.

**15.** The rechargeable lithium battery (100) as claimed in any one of the preceding claims, wherein:
a charge upper voltage of the rechargeable lithium battery is greater than or equal to 4.35 V.

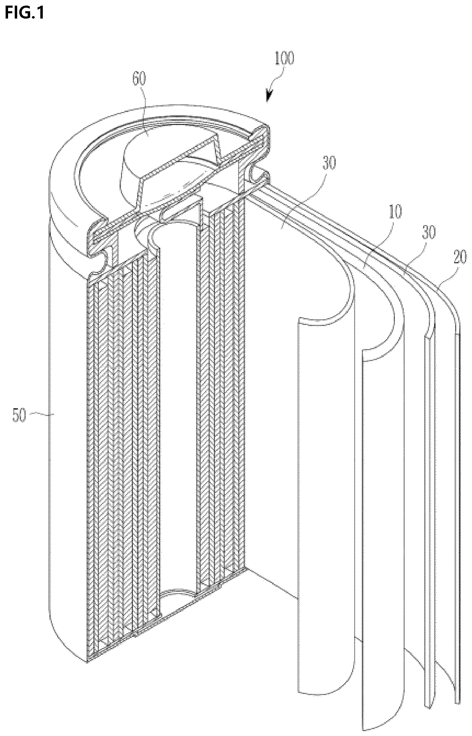

FIG.1